# EUROPEAN PATENT APPLICATION

(11) **EP 0 548 632 A1**
(43) Date of publication of application: **30.06.1993**
(21) Application number: 92120741.1
(22) Date of filing: 04.12.1992
(51) Int. Cl.: G06F 1/00

(54) **Security device for a computer system**

(30) Priority: 05.12.1991 JP 320826/91
(71) Applicant: NEC CORPORATION, Tokyo (JP)
(72) Inventor: Kanai, Seiichi, c/o NEC Corporation, Minato-ku, Tokyo (JP)
(74) Representative: VOSSIUS & PARTNER

(57) **Abstract**

In a security device for a computer system of the present invention, a password comparison means sends the data input from the keyboard (30) to the CPU (90), when a lock status storing section (70) has the data for ineffectiveness of security mode. If the lock status storing section (70) stores the data for effectiveness of security mode, the above means disables sending of the input data to the CPU. When the security mode is effective, the password comparison means compares the input data with the password in a password storing section (50) and, if they are identical, sends the data for ineffectiveness to the lock status storing section (70). When the security mode is ineffective, the password comparison means compares the input data with the key data in a key combination storing section (40) and, if they are identical, sends the data for effectiveness to the lock status storing section.

## Description

The present invention relates to a security device for a computer system, and particularly relates to a security system which ensures security of a computer system by locking input devices such as a keyboard.

Conventionally, security for a typical computer system is ensured by checking of password at the time of system activation or keyboard lock by the operating system.

However, security cannot be sufficiently ensured by the above methods. When password check is used, security is not ensured while the application program is in operation. In the case of keyboard lock by the operating system, the keyboard cannot be locked while the application program is in operation. This means that an improper user could update or refer to the data through keyboard operation while the operator is out of the office.

To prevent such improper use, it is necessary for the operator to terminate the application program for security each time he or she goes out of the office, which is quite troublesome. Besides, some application programs cannot be terminated until the end of the work hour. When such programs are used, it is quite difficult to ensure security and serious problems could occur.

It is an object of the present invention to provide a security device for a computer system without the above drawbacks so as to enable, even while the application program is in operation, setting and cancellation of the security mode to disable input from the input device through certain operations and thereby realize assured security.

According to a preferred embodiment of the present invention to attain the above object, a security device for a computer system comprises a first storing means to store the password for cancellation of the security mode, a second storing means to store a certain combination of key data for setting of the security mode, a third storing means to store the data indicating whether the security mode which disables data input from an input device is effective or not, a data control means which enables data input from said input device when said third storing means has the data indicating ineffectiveness and disables data input from said input device when said third storing means stores the data indicating effectiveness, and a comparison means which compares data input from said input device with the password stored in said first storing means and, when they are identical, sends data for ineffectiveness of said security mode to said third storing means and also compares data input from said input device with the key data stored in said second storing means and, when they are identical, sends data for effectiveness of the security mode to said third storing means.

According to a preferred embodiment, a security device for a computer system further comprises a first judgment means which checks data stored in said third storing means upon input of data from said input device wherein said comparison means compares the input data with the password stored in said first storing means when said judgment means judges that the applicable data is for effectiveness of the security mode, and compares the input data with the key data stored in said second storing means when said judgment means judges that the applicable data is for ineffectiveness.

According to another preferred embodiment, a security device for a computer system further comprises a second judgment means which judges whether said first storing means has any password or not when the input data and the key data stored in said second means are found to be identical as the result of comparison by said comparison means, wherein said comparison means sends data for effectiveness to said third storing means when the second judgment means judges that the first storing means has a password.

According to still another preferred embodiment, a security device for a computer system further comprises a first judgment means which checks the data stored in said third storing means upon input from said input device wherein said comparison means compares the input data with the password stored in said storing means when said judgment means judges that the applicable data is for effectiveness and compares the input data with the key data stored in said second storing means when said judgment means judges that the applicable data indicates ineffectiveness, and further comprises a second judgment means which judges whether said first storing means has any password or not when the input data and the key data stored in said second storing means are identical when compared by said comparison means wherein said comparison means sends data for effectiveness of the security mode to the third storing means when said second judgment means judges that said first storing means has a password.

According to a further preferred embodiment, a security device for a computer system further comprises a fourth storing means which stores a data to indicate whether setting or cancellation of the security mode is effective or ineffective and a third judgment means which checks the data stored in said fourth storing means wherein said third judgment means forcibly enables said data control means when said fourth storing means has the data for ineffectiveness.

According to still another preferred embodiment, a security device for a computer system of Claim 1 further comprises a first judgment means which checks the data stored in said third storing means upon input from said input device, a fourth storing means which stores data indicating whether setting or cancellation of the security mode is effective or ineffective and a third judgment means which checks the data stored in said fourth storing means wherein said comparison means compares the input data with the password stored in said first storing means when said first judgment means judges that the applicable data indicates effectiveness, and compares the input data with the key data stored in said second storing means when the first judgment means judges that the applicable data indicates ineffectiveness, and said third judgment means forcibly enables said data control means when said fourth storing means has the data for ineffectiveness.

Other objects, characteristics and effects of the present invention will be clarified in the detailed description below, in connection with the drawings in which:
Fig. 1 is a block diagram to show the configuration of a security device for a computer system according to an embodiment of the present invention and
Fig. 2 is a flowchart to illustrate the operation of the security device shown in Fig. 1.

Referring to the attached figures, a preferred embodiment of an information processing device of the present invention will be described below.

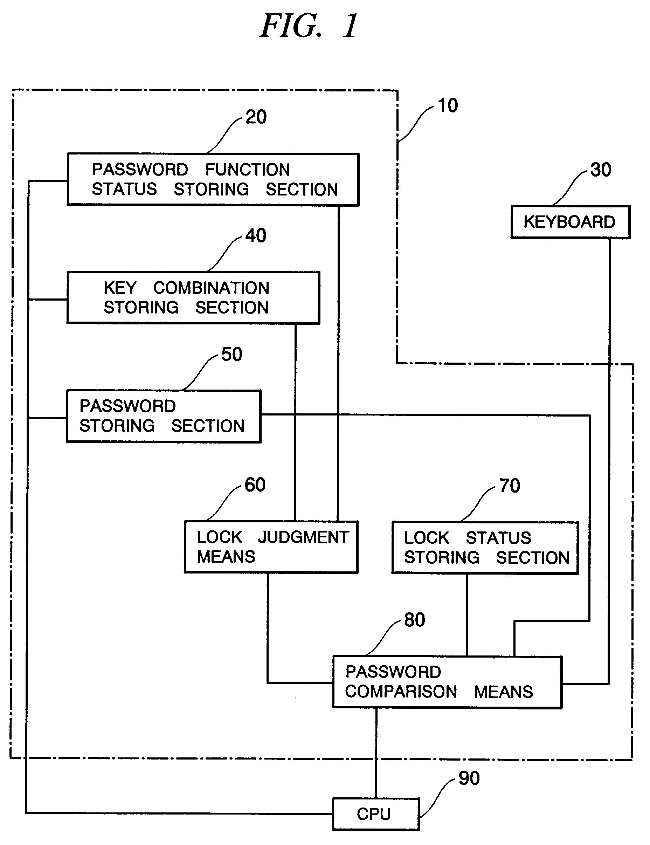

Fig. 1 is a block diagram to show the configuration of a security device for a computer system according to an embodiment of the present invention. In the figure, a security device 10 of this embodiment comprises a password function status storing section 20, a key combination storing section 40, a password storing section 50, a lock judgment means 60, a lock status storing section 70 and a password comparison means 80. In addition, a keyboard 30, which is an input device, is connected with the password comparison means 80 of the security device 10 above and the password comparison means 80 is further connected with a CPU 90 which accepts the data input from the keyboard 30.

When the security device 10 is in non-security mode or normal mode, it passes the data generated at the keyboard 30 to the CPU 90. When it is in security mode, it controls so that the data from the keyboard 30 is not at all sent to the CPU 90.

The password function status storing section 20 stores a data to indicate whether the function of the security device 10 itself is to be made effective or not. To this storing section 20, the CPU 90 stores a data indicating "effective" or "ineffective". To the key combination storing section 40, the CPU 90 stores a key data of certain combination to set the security mode. The key data of certain combination may be key inputs given by simultaneously operating a plurality of keys or by operating a plurality of keys in a certain order. To the password storing section 50, the CPU 90 stores a certain password to cancel the security mode (or locking). The lock status storing section 70 is to store a data to indicate whether the security mode is to be made effective or not. The data to indicate "effective" is given by the lock judgment means 60, and the data to indicate "ineffective" is sent from the password comparison means 80.

Data for the password function status storing section 20, the key combination storing section 40 and the password storing section 50 are stored, for example, through utility program on the operating system running on the CPU 90. For the key combination storing section 40 and the password storing section 50, it is preferable to periodically change the data therein to prevent the same data from being used for a long time in order for ensured security.

The password function status storing section 20 stores the data indicating "effective" when the function of the security device 10 is used, and the data indicating "ineffective" when the function is not used.

As the data stored at the password function status storing section 20 and the lock status storing section 70 to indicate effectiveness or ineffectiveness, binary data of "0" and "1" are stored, for example.

The password function status storing section 20, the key combination storing section 40, the password storing section 50 and the lock status storing section 70 may be composed of exclusive registers, or may use certain parts of the main storage.

The password comparison means 80 has functions to serve as a comparison means and a data control means to enable and disable the data input from the keyboard 30. It operates in non-security mode when the lock status storing section 70 stores the data to indicate ineffectiveness and outputs the data input from the keyboard 30 to the CPU 90. When the lock status storing section 70 stores the data for effectiveness, on the contrary, the password comparison means 80 operates in security mode and disables output of data to the CPU 90 even when it receives data from the keyboard 30.

When the lock status storing section 70 has the data for effectiveness, the password comparison means 80 compares the data from the keyboard 30 with the one stored in the password storing section 50. If they are identical, it stores the data indicating ineffectiveness to the lock status storing section 70 to cancel the security mode. On the other hand, when the lock status storing section 70 has the data for ineffectiveness, the password comparison means 80 compares the data from the keyboard 30 with the key data stored in the key combination storing section 40; if they are identical, it passes the control to the lock judgment means 60. If the key combination storing section 40 does not have any data, the password comparison means 80 compares the data from the keyboard 30 with the predetermined data and, when they are identical, pass the control to the lock judgment means 60.

The key combination storing section 40 may always have certain default data if the key data is not changed.

The lock judgment means 60, upon receipt of control from the password comparison means 80, checks the password function status storing section 20 and the password storing section 50. If the former has the data for effectiveness and the latter has the password, the lock judgment means 60 stores the data to indicate effectiveness to the lock status storing section 70.

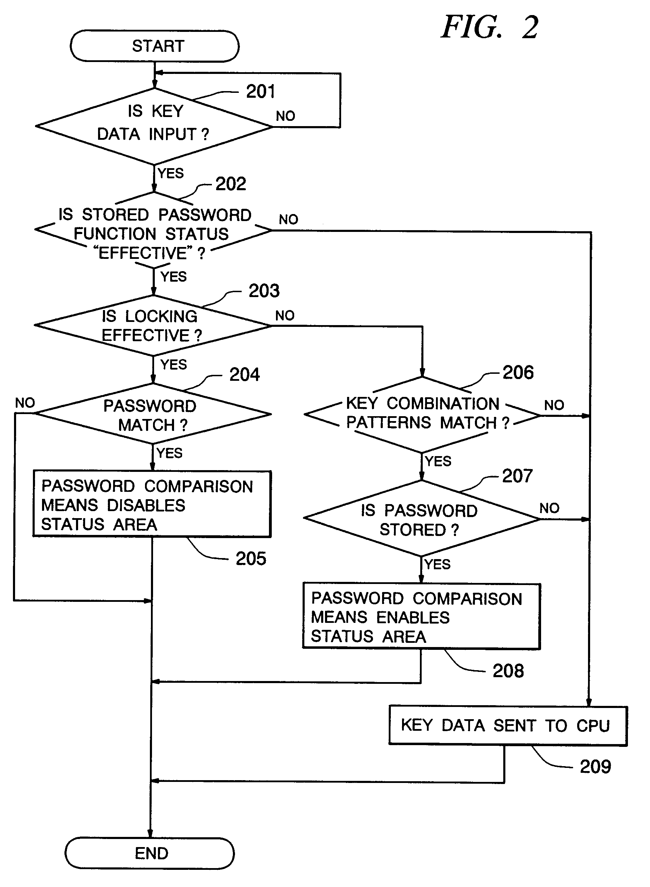

Referring now to the flowchart of Fig. 2, when any key data is input from the keyboard 30 (Step 201), the lock judgment means 60 judges whether the password function status storing section 20 has the data for effectiveness or not (Step 202). If it stores the data for ineffectiveness instead of the one for effectiveness, then the password comparison means 80 enters non-security mode in response to the judgment result sent from the lock judgment means 60, and outputs the data input from the keyboard 30 to the CPU 90 (Step 209). Unless the data for effectiveness is stored at the password function status storing section 20, the following operation is not executed.

If the password function status storing section 20 has the data for effectiveness in Step 202, the password comparison means 80, in response to the judgment result sent from the lock judgment means 60, temporarily stores data received from the keyboard 30. Then, it checks the data stored in the lock status storing section 70 to see whether the lock status (security mode) is effective or not (Step 203). When the data therein indicates that the lock status is effective, it is judged whether the data from the keyboard 30 matches with the password stored in the storing section 50 (Step 204). If it matches with the latter, the data to disable security mode is sent to the lock status storing section 70 (Step 205) and the procedure ends.

Consequently, the password comparison means 80 operates in non-security mode, and the data subsequently input from the keyboard are output to the CPU 90 unless the answer is "Yes" in Step 204. On the other hand, if the result of comparison is "mismatch", the procedure is terminated.

If, in Step 203, the lock status storing section 70 has the data to indicate that the locking is ineffective, the password comparison means 80 compares the data from the keyboard 30 with the key combination data stored in the key combination storing section 40 to see whether the former matches with the latter (Step 206). If the key combination storing section 40 does not have any data, the predetermined data is used for comparison.

If "mismatch" occurs as the result of comparison in Step 206, the data from the keyboard 30 is output to the CPU 90 (Step 209). On the contrary, if the result of comparison is match, the control is passed to the lock judgment means 60.

Then, the lock judgment means 60 judges whether the password storing section 50 has a password or not (Step 208). If it has a password, the data for effectiveness is stored to the lock status storing section 70 (Step 208). Thereafter, the password comparison means 80 operates in security mode. In other words, even when key data is input from the keyboard 30, that data is not at all sent to the CPU 90. Therefore, in security mode, any improper user cannot update or refer to data through keyboard operation.

The reason why the password storing at the password storing section 50 is checked in Step 207 is that this password must be stored at the time of security setting for cancellation of security mode later. Alternatively, the processing by the lock judgment means 60 in step 207 may be deleted if the password comparison means 80 stores data for effectiveness to the lock status storing section 70 when the result of the comparison by the password comparison means 80 in Step 204 is "match".

On the other hand, if the judgment result in Step 206 is "No", data is not stored to the lock status storing section 70. In this case, the password comparison means 80 outputs the data from the keyboard 30 to the CPU 90 (Step 209).

The security device according to the above embodiment may be configured as hardware or software. If it is configured as hardware, exclusive registers are used for the storing sections; if configured as software, certain parts of the main storage are assigned to the storing sections.

As described above, the security device according to the present invention sets a security mode during use of application programs and thereby prevents the data from being updated or referred to through keyboard operation by an improper user. This ensures security of important information resources. The security mode can be canceled by input of the applicable password.

Obviously, various modifications can be made to the above embodiment. For example, though the security is ensured by controlling input from the keyboard 30 in the above embodiment, the application of the present invention is not limited to the keyboard; the invention can be applied to other devices for data input such as a touch panel or a pen input device. It is intended to cover in the appended claims all such modifications as fall within the true scope and the spirit of the present invention.

## Claims

1. A security device for a computer system comprising a first storing means to store the password for cancellation of the security mode,
a second storing means to store a certain combination of key data for setting of the security mode,
a third storing means to store the data indicating whether the security mode which disables data input from an input device is effective or not,
a data control means which enables data input from said input device when said third storing means has the data indicating ineffectiveness and disables data input from said input device when said third storing means stores the data indicating effectiveness, and
a comparison means which compares data input from said input device with the password stored in said first storing means and, when they are identical, sends data for ineffectiveness of said security mode to said third storing means and also compares data input from said input device with the key data stored in said second storing means and, when they are identical, sends data for effectiveness of the security mode to said third storing means.

2. A security device for a computer system of Claim 1 further comprising
a first judgment means which checks data stored in said third storing means upon input of data from said input device wherein
said comparison means compares the input data with the password stored in said first storing means when said judgment means judges that the applicable data is for effectiveness of the security mode, and
compares the input data with the key data stored in said second storing means when said judgment means judges that the applicable data is for ineffectiveness.

3. A security device for a computer system of Claim 1 or 2 further comprising
a second judgment means which judges whether said first storing means has any password or not when the input data and the key data stored in said second means are found to be identical as the result of comparison by said comparison means, wherein
said comparison means sends data for effectiveness to said third storing means when the second judgment means judges that the first storing means has a password.

4. A security device for a computer system of Claim 1 further comprising a first judgment means which checks the data stored in said third storing means upon input from said input device wherein
said comparison means compares the input data with the password stored in said storing means when said judgment means judges that the applicable data is for effectiveness and compares the input data with the key data stored in said second storing means when said judgment means judges that the applicable data indicates ineffectiveness, and
further comprising a second judgment means which judges whether said first storing means has any password or not when the input data and the key data stored in said second storing means are identical when compared by said comparison means wherein
said comparison means sends data for effectiveness of the security mode to the third storing means when said second judgment means judges that said first storing means has a password.

5. A security device for a computer system of any of Claims 1 to 4 further comprising
a fourth storing means which stores a data to indicate whether setting or cancellation of the security mode is effective or ineffective and
a third judgment means which checks the data stored in said fourth storing means
wherein said third judgment means forcibly enables said data control means when said fourth storing means has the data for ineffectiveness.

6. A security device for a computer system of Claim 1 further comprising
a first judgment means which checks the data stored in said third storing means upon input from said input device,
a fourth storing means which stores data indicating whether setting or cancellation of the security mode is effective or ineffective and
a third judgment means which checks the data stored in said fourth storing means wherein
said comparison means compares the input data with the password stored in said first storing means when said first judgment means judges that the applicable data indicates effectiveness, and compares the input data with the key data stored in said second storing means when the first judgment means judges that the applicable data indicates ineffectiveness, and
said third judgment means forcibly enables said data control means when said fourth storing means has the data for ineffectiveness.
